**Europäisches Patentamt**

**European Patent Office**

**Office européen des brevets**

(19)

(11) Veröffentlichungsnummer: **0 309 459 B1**

# EUROPÄISCHE PATENTSCHRIFT

(12)

(45) Veröffentlichungstag der Patentschrift:
06.03.91 Patentblatt 91/10

(51) Int. Cl.⁵: **B60R 25/04**

(21) Anmeldenummer: 87903253.0

(22) Anmeldetag: 25.05.87

(86) Internationale Anmeldenummer:
PCT/DE87/00242

(87) Internationale Veröffentlichungsnummer:
WO 87/07571 17.12.87 Gazette 87/28

(54) **DIEBSTAHLSICHERUNG FÜR KRAFTFAHRZEUGE MIT ELEKTRONISCHEN MOTORSTEUERGERÄTEN.**

(30) Priorität: 16.06.86 DE 3620297

(43) Veröffentlichungstag der Anmeldung:
05.04.89 Patentblatt 89/14

(45) Bekanntmachung des Hinweises auf die
Patenterteilung:
06.03.91 Patentblatt 91/10

(84) Benannte Vertragsstaaten:
CH DE FR GB IT LI SE

(56) Entgegenhaltungen:
DE-A- 2 522 364
DE-A- 3 045 345
US-A- 3 876 884
US-A- 4 584 570

(73) Patentinhaber: HIRTZ, Helmut
Alemannenstrasse 7
W-1000 Berlin 28 (DE)

(72) Erfinder: HIRTZ, Helmut
Alemannenstrasse 7
W-1000 Berlin 28 (DE)

(74) Vertreter: Maikowski, Michael, Dipl.-Ing. Dr.
Patentanwälte Maikowski & Ninnemann
Xantener Strasse 10
W-1000 Berlin 15 (DE)

EP 0 309 459 B1

## Beschreibung

Die Erfindung betrifft eine Diebstahlsicherung für Kraftfahrzeuge nach dem Oberbegriff des Patentanspruchs 1.

Es ist bekannt, Kraftfahrzeuge mit elektronischen Motorsteuergeräten auszurüsten. Diese Steuergeräte tasten Umweltgrößen und Betriebsgrößen ab und steuern Motorfunktionen. Außerdem können mit diesen Motorsteuergeräten Zustände überwacht und Fehlfunktionen angezeigt werden. Diese Motorsteuergeräte sind fahrzeugtypstandardisierte Module. Für jeden speziellen Fahrzeugtyp wird ein Modul als fertiger Bauteil geliefert. Diese Module liegen in Gestalt geschlossener Stahlghäuse vor, die auswechselbar im oder am Fahrzeug montiert werden können. Zum Anschluß des Moduls ist eine Vielpohlsteckverbindung vorgesehen, in der die Signal-, Meß-, und Steuerleitungen und weitere Leitungen zusammenlaufen und die dazu dient, eine Steckverbindung mit dem auswechselbaren Modul herzustellen.

Bei der Diebstahlsicherung für Kraftfahrzeuge sollte insbesondere dafür Sorge getragen werden, daß mit größtmöglicher Sicherheit eine nicht autorisierte Inbetriebnahme des Kraftfahrzeuges verhindert wird. Es hat sich gezeigt, daß es viel wichtiger ist, das nicht autorisierte Wegfahren eines Fahrzeuges zu verhindern als eine nicht autorisierte Inbetriebnahme durch akustische und/oder optische Signale anzuzeigen. Die Erfahrung hat gezeigt, daß die Fertigkeiten der Kraftfahrzeugdiebe, Sicherungen zu überwinden, parallel zur technischen Weiterentwicklung derartiger Sicherungen zunehmen. Für einen Kraftfahrzeugdieb ist es von Bedeutung, eine Sicherung in möglichst kurzer Zeit zu überwinden. Es besteht deshalb ein großer Bedarf an Diebstahlsicherungen, die einerseits mit dem normalen Fahrzeugbetrieb kompatibel sind, wobei andererseits die Zeitdauer zu deren möglicher oder auch nur denkbarer Überwindung groß ist.

Eine Sicherungsmaßnahme kann darin bestehen, daß die Funktion des elektronischen Motorsteuergerätes ausgeschaltet wird. Diese Ausschaltung erfolgt in einer von außen betätigbaren und sperrbaren Weise. Nach dem Ausschalten des elektronischen Motorsteuergerätes ist es nicht möglich, das Kraftfahrzeug in Betrieb zu setzen. Für eine nicht autorisierte Inbetriebnahme wäre es erforderlich, im Modul die in dessen Gehäuse eingebaute, von außen betätig- und sperrbare Unterbrecherschaltung wieder einzuschalten. Eine einfache Wiedereinschaltung kann durch an sich bekannte Sicherungsmaßnahmen, wie beispielsweise Sicherheitsschlüssel oder codierte Schalter, verhindert werden.

Bekanntlich erfolgen Diebstähle hochwertiger Kraftfahrzeuge in professionller Manier. Ein Ausschalten der beschriebenen Sicherung könnte bei gezieltem professionellen Vorgehen dadurch erfolgen, daß Diebe sich für bestimmte Fahrzeugtypen die im Handel erhältlichen Module der elektronischen Motorsteuergeräte beschaffen und bei einem Diebstahlversuch den ausgeschalteten Modul wechseln. Ein derartiger Wechsel erfordert aber zwangsläufig das Abziehen der Vielpohlsteckverbindung vom Modul.

Aus der DE-OS 30 45 345 ist eine Diebstahlsicherung für Fahrzeuge mit einem eine wesentliche Funktion des Motors unterbrechenden Schalter bekannt, der durch eine im Fahrzeuginnern befindliche Betätigungseinrichtung schaltbar ist. Die Betätigungseinrichtung ist eine Schalteinrichtung, an der unterschiedliche Zahlenkombinationen einstellbar sind. An einem funktionswesentlichen elektrischen Bauteil des Motors ist ein Dekodierer angebracht, der über mindestens eine elektrische Leitung mit der Schalteinrichtung verbunden ist und nur dann ein Ausgangssignal erzeugt, wenn an der Schalteinrichtung eine bestimmte Zahlenkombination eingestellt ist. Dieses Ausgangssignal des Dekodierers schließt einen Unterbrecher in einer Leitung dieses Bauteils.

Aus der US-PS 38 76 884 ist eine Diebstahlsicherung bekannt, die durch den Zündschlüssel gewährleistet wird. Die Zündung bei dieser bekannten Einrichtung ist derart ausgebildet, daß mittels einer Steckverbindung an den Induktionszündkreis ein kapazitiver Endladezündkreis angeschlossen werden kann. In diesen kapazitiven Endladezündkreis ist ein durch den Zündschlüssel betätigbarer Umschalter angeordnet.

Der Erfindung liegt die Aufgabe zugrunde, für Kraftfahrzeuge mit elektronischen Motorsteuergeräten eine Diebstahlsicherung zu schaffen, die dadurch eine optimale Sicherheit gewährleistet, daß deren mögliche oder auch nur denkbare Ausschaltung mit einem außerordentlichen großen Zeit-, Arbeits- und Erfahrungsaufwand verbunden ist.

Erfindungsgemäß wird diese Aufgabe durch die Merkmale des Patentanspruchs 1 gelöst.

Gemäß der Erfindung ist vorgesehen, daß in dem fahrzeugfesten Teil der Vielpohlsteckverbindung eine Schaltung eingebaut ist, die von außen in codierter oder sperrbarer Weise betätigbar ist und die bewirkt, daß nach jeder Trennung oder nur nach einer nicht autoriesierten Trennung der Steckverbindung nach dem Aufstecken des fahrzeugfesten Teils der Steckverbindung auf einen Ersatzmodul eine derartige Leitungsunterbrechung erfolgt, daß eine Inbetriebnahme des Fahrzeugs nicht möglich ist.

Es wird eine zweistufige oder Tandemsicherung geschaffen. Die Überwindung der ersten Sicherung am Modul ist durch Manipulation am Modul praktisch nicht durchführbar. Sollte durch professionelle außerordentlich gewiegte Diebe versucht werden, diese erste Sicherung durch Modulaustausch zu überwinden, wird die nachgeschaltete zweite Sicherung wirksam, und deren Überwindung ist in kurzer Zeit ohne aufwendige Arbeiten unmöglich.

Mit Vorteil kann die in den Modul eingebaute Unterbrecherschaltung ein elektronischer Schalter mit einer von außen betätigbaren codierten Schalttastatur sein. Es ist aber auch möglich, einen schlüsselbetätigten Schalter vorzusehen.

Die Schalter, die den Vielpolsteckverbinder eingebaut werden können, weisen zwei verschiedene Funktionsarten auf. Die Schalter können einmal so gestaltet sein, daß bei jeder Trennung, und zwar sowohl bei der autorisierten als auch bei der nicht autorisierten, eine Unterbrechung in einem oder mehreren Leitungsweg(en) erfolgt.

Eine Wiedereinschaltung und damit ein ordnungsgemäßer Anschluß eines Ersatzmoduls ist aber nur über codierte oder schlüsselbetätigte Schaltelemente möglich. Die andere Funktionsweise besteht darin, daß nur bei nicht autorisierter Trennung eine Unterbrechung erfolgt und daß vor einer autorisierten Unterbrechung durch eine codierte oder schlüsselbetätigte Schaltung die beim Trennen vorgesehenen Unterbrechungsmaßnahmen gesperrt werden.

Vorteilhafte Weiterbildungen sind Gegenstand der Unteransprüche.

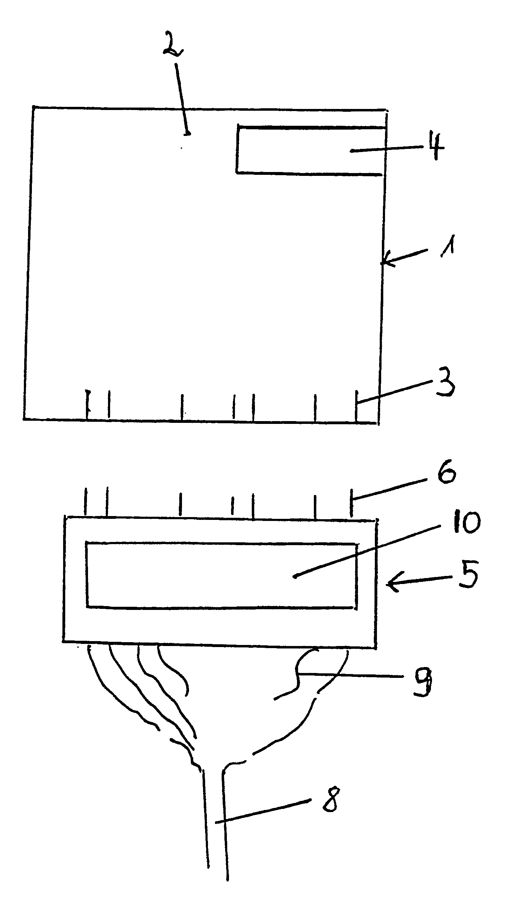

Ausführungsbeispiele der Erfindung sollen unter Bezugnahme auf die Zeichnung erläutert werden.

In der Zeichnung schematisch ein Modul 1 dargestellt, welches ein Stahlgehäuse 2 aufweist. In diesem Stahlgehäuse 2 sind die Bauelemente des elektronischen Steuergerätes untergebracht. Dieser Modul 1 weist nicht dargestellte Halterungs- und Montageeinrichtungen auf, mit denen dieser Modul 1 in ausbaubarer Weise im oder am Fahrzeug montiert werden kann. Zum elektrischen Anschluß weist dieser Modul 1 Anschlußbuchsen 3 auf. Im Kraftfahrzeug sind zahlreiche Meß-, Steuer-, Signal- und dergleichen -leitungen verlegt.

Diese sind im Kabel 8 zusammengefaßt, an dessen Ende der Vielpolsteckverbinder angeordnet ist. Dieser Vielpolsteckverbinder 5 weist Stecker 6 auf, die zur Herstellung des Anschlusses in die Buchsen 3 des Moduls 1 eingesteckt werden. Lediglich schematisch sind am Steckverbinder 5 Einzelleitungen 9 dargestellt, die im Steckverbinder aus dem Anschlußkabel 8 heraustreten und zu den zugeordneten Steckern 6 geführt werden.

In das Gehäuse 2 des auswechselbaren Moduls 1 ist mindestens eine Unterbrecherschaltung 4 eingebaut. Diese Unterbrecherschaltung dient dazu, wenigstens einen Funktions- und/oder Steuerkreis oder Strom-und/oder Spannungskreis der elektronischen Motorsteuerung zu unterbrechen oder auszuschalten. Dieser Unterbrecherschaltung 4 kann beispielsweise von außen mittels einer codierten Schalttastatur betätigbar sein. Es ist aber auch möglich, diese Unterbrecherschaltung mit einem Zylinderschloß oder Schaltelement und einem entsprechenden Sicherheitsschlüssel auszurüsten.

Diese Unterbrecherschaltung 4 dient dazu, bei einer von außen vorgenommenen Maßnahme den Modul 1 und damit das elektronische Motorsteuergerät funktionsunfähig zu machen. Das Ausschalten der Unterbrecherschaltung 4 geschieht prinzipiell derart, daß eine nicht autorisierte Wiedereinschaltung nicht möglich ist. Es besteht auch die Möglichkeit, diese Unterbrecherschaltung 4 mit einer Fernbedienung zu verbinden, wobei die Bedienungselemente sich beispielsweise am Instrumentenbrett des Kraftfahrzeuges befinden können.

Im Vielpolsteckverbinder 5 ist eine schematisch dargestellte Ein-Aus-Schaltung 10 vorgesehen. Diese Schaltung ist elektrisch in einem, mehreren oder allen Strom- oder Spannungsweg(en) zwischen den Steckern 6 und den austretenden Einzelleitungen 9 eingeschaltet. Diese Ein-Aus-Schaltung 10 kann mechanische Schaltelemente und/oder elektrische und/oder elektronische Schaltelemente umfassen. Diese Schaltung 10 kann so gestaltet sein, daß sie bei jeder Trennung ausschaltet und daß eine Einschaltung nur nach einer Manipulation erfolgen kann, die nur ein autorisierter Benutzer durchführen kann. Es besteht aber auch die Möglichkeit, diese Schaltung 10 so auszulegen, daß bei einem nicht autorisierten Trennen eine Unterbrechung erfolgt, daß aber vor einem autorisierten Trennen durch Maßnahmen, die nur ein autorisierter Benutzer durchführen kann, die Unterbrechungsfunktion beim Trennen ausgeschaltet wird.

Beispielsweise kann die Schaltung 10 ein an sich bekannter elektronischer Schalter sein, der von einem unterbrechbaren Ruhestromkreis in der Schaltstellung "Ein" gehalten ist. Es gibt verschiedene Möglichkeiten, den Ruhestromkreis so zu gestalten, daß dieser beim Trennen des Vielpolsteckverbinders 5 vom Modul 1 unterbrochen wird. Zum Beispiel könnte ein Teil des Ruhestromkreises durch den Modul 1 geführt werden. Es besteht aber auch die Möglichkeit, im Vielpolsteckverbinder 5 einen Schalter vorzusehen, der diesen Ruhestromkreis beim Trennen unterbricht. Bei der Wiederherstellung der Steckverbindung wird der Ruhestromkreis dann wieder eingeschaltet. Der elektronische Schalter selbst bleibt aber solange ausgeschaltet, bis durch eine codierte Tastaturschaltung dieser Schalter 10 wieder in die Schaltstellung "Ein" zurückgeschaltet wird. Es besteht auch die Möglichkeit, den elektronischen Schalter so auszubilden, daß dessen unterbrechbarer Ruhestromkreis bei einer autorisierten Trennung durch einen von außen steuerbaren Schalter kurzschließbar ist. Dieser Schalter kann dann lediglich über eine codierte Tastatur oder mittels eines Schlüssels betätigt werden. Bei dieser Ausführungsform erfolgt eine Ausschaltung lediglich bei einer nicht autorisierten Trennung.

Eine Ausschaltung bei einer nicht autorisierten Trennung kann auch durch eine Schaltung 10 erfolgen, die durch eine mechanische Kraft in der Schaltstellung "Ein" zu halten ist. Hierzu kann beispielsweise ein Druckelement vorgesehen sein. Wenn beim Trennen diese mechanische Kraft aufgehoben wird, erfolgt ein Ausschalten. Mittels einer Tastatur oder eines Schlüssels kann ein schaltbarer Sperrmechanismus die Aufhebung dieser mechanischen Kraft sperren, so daß ein autorisiertes Abziehen möglich ist. Dieses Prinzip kann auch umgekehrt werden, wobei mittels einer mechanischen Kraft beim Abziehen direkt das Ausschalten erfolgt. Dabei kann dann von der autorisierten Person das Einwirken dieser Kraft beim autorisierten Abziehen ausgeschaltet werden.

## Ansprüche

1. Diebstahlsicherung für Kraftfahrzeuge mit elektronischen Motorsteuergeräten, die fahrzeugtyp-standardisierte Module, insbesondere in Gestalt geschlossener Stahlgehäuse sind, in dem mindestens eine von außen betätig- und sperrbare Unterbrecherschaltung für wenigstens einen Funktions-und/oder Steuerkreis der elektronischen Motorsteuerung eingebaut ist, und welche auswechselbar am oder im Fahrzeug montiert sind und mittels einer Vielpohlsteckverbindung an im Fahrzeug verlegte Signal-, Meß-, Steuerleitungen anschließbar sind, dadurch gekennzeichnet daß, in dem fahrzeugfesten Teil der Vielpohlsteckverbindung (5) in mindestens einem Stromweg zwischen wenigstens einem Stecker (6) des fahrzeugfesten Teils der Vielpohlsteckverbindung (5) und zumindest einer aus diesem austretenden Einzelleitung (9) eine EinAus-Schaltung (10) eingebaut ist, die bei jeder Trennung der Vielpohlsteckverbindung (5) oder nur bei jeder nicht autorisierten Trennung den oder die Stromweg (e) unterbricht.

2. Diebstahlsicherung nach Anspruch 1, dadurch gekennzeichnet, daß die Unterbrecherschaltung (4) im Modul (1) ein elektronischer Schalter mit einer von außen betätigbaren, codierten Schaltertastatur ist.

3. Diebstahlsicherung nach Anspruch 1, dadurch gekennzeichnet, daß die Unterbrecherschaltung (4) im Modul (1) ein schlüsselbetätigter Schalter ist.

4. Diebstahlsicherung nach einem der Ansprüche 1-3, dadurch gekennzeichnet, daß die Ein-Aus-Schaltung (10) ein elektronischer Schalter ist, der von einem unterbrechbaren Ruhestromkreis in der Schaltstellung "Ein" gehalten ist und nach Unterbrechung des Ruhestromkreises nur durch eine codierte Tastaturschaltung in die Schaltstellung "Ein" zurückschaltbar ist.

5. Diebstahlsicherung nach einem der Ansprüche 1-3, dadurch gekennzeichnet, daß die Ein-Aus-Schaltung (10) ein elektronischer Schalter ist, der von einem unterbrechbaren Ruhestromkreis in der Schaltstellung "Ein" gehalten ist und dessen Ruhestromkreis mittels eines, mit einer codierten Tastatur oder einem Schlüssel steuerbaren Schalter kurzschließbar ist.

6. Diebstahlsicherung nach einem der Ansprüche 1-3, dadurch gekennzeichnet, daß die Ein-Aus-Schaltung (10) ein durch eine mechanische Kraft in der Schaltstellung "Ein" gehalten ist und daß mittels eines, mit einer Tastatur oder einem Schlüssel schaltbaren Sperrmechanismus die Aufhebung der mechanischen Kraft sperrbar ist.

## Claims

1. Anti-theft device for vehicles with electronic engine control systems which are vehicle model standardized modules, particularly in the form of closed steel casings, in which casing at least one contact breaker circuit is installed which can be operated and blocked from outside for at least one function and/or control circuit of the electronic engine control, the modules being mounted interchangeably on or in the vehicle and are connectable by a multi-pole push in connection to signal, measuring and control leads located in the vehicle, characterised in that an on-off switch (10) is installed in the part of the multi-pole push-in connection (5) fixed on the vehicle in at least one flow path between at least one plug (6) of the part of the multi-pole push-in connection (5) fixed on the vehicle and at least one individual lead (9) emerging from same, and with each separation of the multi-pole push-in connection (5) or only with each non-authorized separation the on-off switch (10) breaks the or each flow path (e).

2. Anti-theft device according to claim 1 characterised in that the contact breaker circuit (4) in the module (1) is an electronic switch with a coded switch key which can be operated from outside.

3. Anti-theft device according to claim 1, characterised in that the contact breaker circuit (4) in the module (1) is a key-operated switch.

4. Anti-theft device according to one of claims 1-3 characterised in that the on-off circuit (10) is an electronic switch which is held in the "ON" position by a breakable closed circuit and once the closed circuit has been broken can only be switched back into the "ON" position by a coded key circuit.

5. Anti-theft device according to one of claims 1-3 characterised in that the on-off circuit (10) is an electronic switch which is held in the "ON" position by a breakable closed circuit whereby the closed circuit can be short-circuited by a switch controllable by a coded keyboard or key.

6. Anti-theft device according to one of claims 1-3 characterised in that the on-off switch (10) is held in the "ON" position by a mechanical force and that the lifting of the mechanical force can be blocked by a locking mechanism which can be switched by a keyboard or key.

empêchée par un clavier ou un mécanisme de blocage pouvant être commuté au moyen d'une clé.

## Revendications

1. Dispositif antivol pour véhicules à systèmes électroniques de commande du moteur qui sont des modules standardisés du type pour véhicule et en particulier sous forme de boîtier d'acier fermé, dans lequel est incorporé au moins un circuit d'interruption verrouillable et pouvant être actionné de l'extérieur pour au moins un circuit de fonction et/ou de commande de la commande électronique du moteur et qui sont montés de manière amovible sur ou dans le véhicule et qui peuvent être raccordés au moyen d'une connexion enfichable quadripolaire aux conducteurs de signalisation, de mesure et de commande placés dans le véhicule, caractérisé en ce que, dans la partie fixe du véhicule de la jonction enfichable quadripolaire (5), au moins dans un trajet de courant entre au moins une fiche (6) de la partie fixe du véhicule de la liaison enfichable quadripolaire (5) et au moins un conducteur individuel (9) sortant de celui-ci, est incorporé un circuit (10) d'enclenchement-déclenchement qui interrompt le ou les passage(s) de courant à chaque coupure de la liaison enfichable quadripolaire ou uniquement pour chaque coupure non autorisée.

2. Dispositif antivol selon la revendication 1, caractérisé en ce que le circuit d'interruption (4) dans le module (1) est un commutateur électronique avec des touches de commutation codées et pouvant être actionnées de l'extérieur.

3. Dispositif antivol selon la revendication 1, caractérisé en ce que le circuit d'interruption (4) dans le module (1) est un commutateur à clé.

4. Dispositif antivol selon l'une des revendications 1 à 3, caractérisé en ce que le circuit d'enclenchement-déclenchement (10) est un commutateur électronique qui est maintenu dans la position d'enclenchement par un circuit à courant de repos interruptible et qui ne peut être ré-enclenché après l'interruption du circuit du courant de repos que par un circuit de clavier codé.

5. Dispositif antivol selon l'une des revendications 1 à 3, caractérisé en ce que le circuit d'enclenchement-déclenchement (10) est un commutateur électronique qui est maintenu en position d'enclenchement par un circuit à courant de repos interruptible et dont le circuit à courant de repos peut être mis en court-circuit au moyen d'un commutateur pouvant être commandé par une clé ou par un clavier codé.

6. Dispositif antivol selon l'une des revendications 1 à 3, caractérisé en ce que le circuit d'enclenchement-déclenchement (10) est maintenu en position d'enclenchement par une force mécanique et que la suppression de la force mécanique peut être